# EUROPEAN PATENT SPECIFICATION

(11) **EP 2 581 675 B1**
(45) Date of publication and mention of the grant of the patent: **21.08.2019**
(21) Application number: 10852905.8
(22) Date of filing: 11.06.2010
(51) Int. Cl.: F24F 13/14, F24F 12/00, F24F 110/10, F24F 11/81, F24F 11/00

(54) **VENTILATION AND AIR-CONDITIONING APPARATUS AND METHOD FOR CONTROLLING SAME**
LÜFTUNGS- UND KLIMAANLAGE SOWIE STEUERVERFAHREN DAFÜR
APPAREIL DE VENTILATION ET DE CLIMATISATION, ET PROCÉDÉ POUR COMMANDER CET APPAREIL

(43) Date of publication of application: 17.04.2013
(73) Proprietor: Mitsubishi Electric Corporation, Tokyo 100-8310 (JP)
(72) Inventor: KORETOMO, Masayuki, Tokyo 100-8310 (JP); YASUDA, Masami, Tokyo 100-8310 (JP); ARAI, Hidemoto, Tokyo 100-8310 (JP); HASEGAWA, Masahiro, Tokyo 102-0073 (JP); OKEYA, Kenta, Tokyo 100-8310 (JP)
(74) Representative: Pfenning, Meinig & Partner mbB
(86) International application number: PCT/JP2010/059972
(87) International publication number: WO 2011/155069

(56) References cited:
- DE-U1- 9 108 284
- JP-A- H01 147 240
- JP-A- 2006 308 241
- JP-A- 2006 308 241
- JP-A- 2009 250 451
- JP-A- 2009 250 451

## Description

### Field

The present invention relates to a ventilation and air-conditioning apparatus having a heat exchanger that performs heat exchange between air currents flowing into a supply-air passage and a discharge-air passage, and to a method for controlling the apparatus.

### Background

As an air-conditioning apparatus that keeps a temperature of a target room within a fixed range and that includes an air-conditioning unit constituted by an air-conditioning coil and an air blower, a supply-air-temperature setting unit that controls the capability of the air-conditioning coil, a control unit constituted by a room-temperature setting unit that controls the capability of the air blower via an inverter, and a supply-air-temperature detection unit and a room-temperature detection unit that transmit detected temperatures to the supply-air-temperature setting unit and the room-temperature setting unit, respectively, there has been known an apparatus that changes the air-blowing capability of the air blower to keep the temperature of the target room within a fixed range.

As a temperature-and-humidity control apparatus using a temperature-and-humidity controlling method for heating and humidifying air having been cooled by an evaporator in a refrigeration cycle up to preset temperature and humidity to supply conditioned air, there has been known an apparatus that controls the volume of humidifying by controlling the compression capability based on a blowout temperature according to this method.

Furthermore, as an air-conditioning device having a sensor that measures air temperature and humidity of an intake port used for supplying air from outside of a room and a sensor that measures air temperature and humidity of a blowout port used for supplying air into the room, there has been known a device that controls the air volume of an air blower by calculating the air volume based on a difference between the intake temperature and the blowout temperature and that controls the quantity of a coolant by determining the capability of a cooling unit.

Further, as a bathroom sauna apparatus that includes a unit that heats and humidifies air, an air blowing unit that circulates air in a bathroom, and a blowout-port-temperature detection unit provided at a blowout port of the apparatus and that controls these units, there has been known an apparatus that measures an air temperature with a sensor and that controls the blowout temperature based on a detection value of an air-temperature detection unit provided at a blowout port used for supplying air into a room.

Moreover, as an air-conditioning apparatus that controls an air blowing unit, a humidification unit, a dehumidification unit, a heating unit, and a cooling unit based on an air temperature of a blowout port used for supplying air into a room, there has been known an apparatus that can control temperature and humidity in a ventilation area.

Furthermore, as an air-conditioning apparatus that has an air-conditioning coil and a humidifier and that executes temperature control by heat exchange using the air-conditioning coil and also humidity control by humidification using the humidifier at the same time, there has been known an apparatus that includes a valve for adjusting the volume of water supplied to the humidifier based on an air temperature of a blowout port used for supplying air and that controls the valve.

Further, there has been known a heat-exchange ventilation apparatus including, in a main unit thereof, a supply-air passage that connects outside of a building and the inside of a room via an outdoor intake port and an indoor blowout port, a discharge-air passage that connects the inside of the building and outside thereof via an indoor intake port and an outdoor blowout port, a supply-air blower that forms a supply-air current directing from the outdoor intake port to the indoor blowout port in the supply-air passage, a discharge-air blower that forms a discharge-air current directing from the indoor intake port to the outdoor blowout port in the discharge-air passage, and a heat exchanger that performs heat exchange between air currents flowing in the supply-air passage and the discharge-air passage (see, for example, Patent Literatures 1 to 7).
The document JP 2009-250451 A discloses a ventilation device in which a heat exchanger can be bypassed by opening or closing a switching part. The document JP 2009-250451 A thereby discloses a ventilation and air-conditioning apparatus according to the preamble of claim 1.

### Citation List

### Patent Literatures

Patent Literature 1: Japanese Patent Application Laid-open No. 2006-97906
Patent Literature 2: Japanese Patent Application Laid-open No. 2003-302088
Patent Literature 3: Japanese Patent Application Laid-open No. 7-004724
Patent Literature 4: Japanese Patent Application Laid-open No. 2008-125793
Patent Literature 5: Japanese Patent Application Laid-open No. 2002-048380
Patent Literature 6: Japanese Patent Application Laid-open No. 2006-029598
Patent Literature 7: Japanese Patent Application Laid-open No. 2009-293880

### Summary

### Technical Problem

In the conventional ventilation and air-conditioning apparatus described above, a damper is used to select either total heat exchange between the air supplied from outside and the air discharged from the room or direct supply of the air from outside without performing the total heat exchange, and therefore there is a problem that a supply-air temperature of the air blown into the room cannot be adjusted. Also in the conventional ventilation and air-conditioning apparatus, the air-conditioning coil always needs to be driven to adjust the supply-air temperature of the air blown into the room, and therefore there is a problem that electricity is always necessary even in intermediate seasons such as spring and autumn.

In the conventional ventilation and air-conditioning apparatus having an air-conditioning coil, when the blowout temperature is higher or lower than a preset temperature, the degree of opening of a throttle device (LEV) of the air-conditioning coil is adjusted and the quantity of a coolant is changed for the temperature setting. However, also when the LEV cannot be fully throttled or opened, the air-conditioning coil is stopped when the blowout temperature has not reached the preset temperature. When an operation of the air-conditioning coil is stopped, an operation of an outdoor unit is also stopped when other air-conditioners except for the present ventilation and air-conditioning apparatus are not in operation. The operation stoppage of the air-conditioning coil leads to a gradual increase in a room temperature in summer and also leads to a gradual decrease in winter. When the room temperature increases far above or decreases far below a target temperature, the operation of the outdoor unit is started again, and accordingly the operation of the air-conditioning coil is started. Therefore, the room temperature does not converge at the target temperature, and the air-conditioning coil and the outdoor unit are started and stopped repetitively, which causes large changes in the room temperature and deviation thereof from the target temperature, thereby problematically generating uncomfortable air conditions.

The present invention has been achieved in view of the above problems, and an object of the present invention is to provide a ventilation and air-conditioning apparatus that can achieve stable temperature management and also achieve control of a blowout temperature in an energy-saving and comfortable manner, and to provide a method for controlling the ventilation and air-conditioning apparatus.

### Solution to Problem

In order to solve above-mentioned problems and achieve the object of the present invention, there is provided a ventilation and air-conditioning apparatus including a casing provided with a supply-air intake port and a discharge-air blowout port on outside of a room, and a discharge-air intake port and a supply-air blowout port on inside of a room; a supply-air passage formed in the casing to lead from a supply-air intake port to a supply-air blowout port; a discharge-air passage formed in the casing to lead from a discharge-air intake port to a discharge-air blowout port; a heat exchanger that performs heat exchange between air currents flowing through the supply-air passage and the discharge-air passage; a bypass passage formed in the casing in parallel to the discharge-air passage to bypass the heat exchanger and to lead from the discharge-air intake port to the discharge-air blowout port; a supply-air blower that takes in outdoor air from a supply-air intake port and supplies the outdoor air into a room from a supply-air blowout port; a discharge-air blower that takes in indoor air from a discharge-air intake port and discharges the indoor air from a discharge-air blowout port to outside of the room; a passage switching unit that is provided between the discharge-air passage and the bypass passage and that switches whether to pass indoor air taken in from a discharge-air intake port through the heat exchanger; a temperature sensor that is provided between the heat exchanger and the supply-air blowout port and that measures a temperature of air supplied to a room; and a control unit that controls the supply-air blower, the discharge-air blower, and the passage switching unit, a temperature adjustment unit that is provided on a side of a downstream of the heat exchanger in the supply-air passage and that heats or cools air in the supply-air passage, wherein the control unit controls the passage switching unit to adjust a degree of opening of the bypass passage in a range from 0 to 100 % based on an output of the temperature sensor so that a temperature of air supplied to a room approaches a predetermined temperature and, when the temperature of air supplied to a room does not reach the predetermined temperature by adjusting the bypass passage, then starts to control the temperature adjustment unit so that the temperature of air supplied to the room approaches the predetermined temperature.

There is also provided a method for controlling a ventilation and air-conditioning apparatus, wherein the ventilation and air-conditioning apparatus including a casing provided with a supply-air intake port and a discharge-air blowout port on outside of a room, and a discharge-air intake port and a supply-air blowout port on inside of a room, supply-air passage formed in the casing to lead from a supply-air intake port to a supply-air blowout port, a discharge-air passage formed in the casing to lead from a discharge-air intake port to a discharge-air blowout port, a heat exchanger that performs heat exchange between air currents flowing through the supply-air passage and the discharge-air passage, a supply-air blower that takes in outdoor air from a supply-air intake port and supplies the outdoor air into a room from a supply-air blowout port, and a discharge-air blower that takes in indoor air from a discharge-air intake port and discharges the indoor air from a discharge-air blowout port to outside of the room, and the method including forming a bypass passage in the casing in parallel to the discharge-air passage, the bypass passage bypassing the heat exchanger and leading from the discharge-air intake port to the discharge-air blowout port; providing a passage switching unit between the discharge-air passage and the bypass passage, the passage switching unit switching whether to pass indoor air taken in from a discharge-air intake port through the heat exchanger; providing a temperature sensor between the heat exchanger and the supply-air blowout port, the temperature sensor measuring a temperature of air supplied to a room; and controlling the passage switching unit to continuously adjust a degree of opening of the bypass passage in a range from 0 to 100 % based on an output of the temperature sensor so that a temperature of air supplied to a room approaches a predetermined temperature and, when the temperature of air supplied to a room does not reach the predetermined temperature by adjusting the bypass passage, then starts to control the temperature adjustment unit so that the temperature of air supplied to the room approaches the predetermined temperature.
The "heat exchanger" includes both a heat exchanger and a total heat exchanger.

### Advantageous Effects of Invention

The ventilation and air-conditioning apparatus according to the present invention can achieve stable temperature control, and can bring a supply-air temperature of air supplied into a room close to a target temperature only by controlling a passage switching unit and mixing heat exchange ventilation and normal ventilation at a different ratio in intermediate seasons such as spring and autumn, thereby achieving control of a blowout temperature in an energy-saving and comfortable manner.

### Brief Description of Drawings

FIG. 1 is a schematic diagram of a ventilation and air-conditioning apparatus according to a first embodiment of the present invention, and of a state where a damper is opened.
FIG. 2 is a schematic diagram of the ventilation and air-conditioning apparatus according to the first embodiment of the present invention, and of a state where a damper is closed.
FIG. 3 is a flowchart of blowout temperature adjustment by a damper.
FIG. 4 is a flowchart of a control executed during a heating operation such as in winter.
FIG. 5 is a flowchart of a control executed during a cooling operation such as in summer.
FIG. 6 is a schematic diagram of a ventilation and air-conditioning apparatus according to a second embodiment of the present invention.

### Description of Embodiments

Exemplary embodiments of a ventilation and air-conditioning apparatus according to the present invention will be explained below in detail with reference to the accompanying drawings. The present invention is not limited to the embodiments.

### First embodiment.

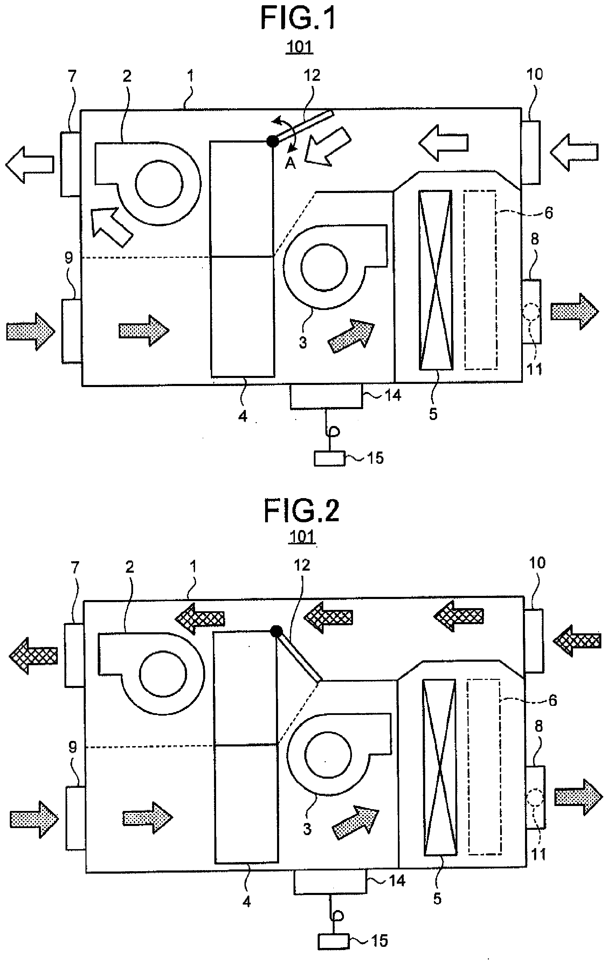

FIG. 1 is a schematic diagram of a ventilation and air-conditioning apparatus according to a first embodiment of the present invention, and of a state where a damper is opened. FIG. 2 is a schematic diagram of the ventilation and air-conditioning apparatus according to the first embodiment of the present invention, and of a state where a damper is closed. A ventilation and air-conditioning apparatus 101 is mounted on a building and includes a box-shaped main-body casing 1 exposed to both inside and outside of a room. On the outside of the room of the main-body casing 1, a discharge-air blowout port 7 and a supply-air intake port 9 are provided, and on the inside of the room, a supply-air blowout port 8 and a discharge-air intake port 10 are provided. When the supply-air intake port 9 and the supply-air blowout port 8 are communicated with each other, a supply-air passage for taking in outside air into the room is formed as indicated by gray arrows in FIG. 1, and when the discharge-air intake port 10 and the discharge-air blowout port 7 are communicated with each other, a discharge-air passage for discharging indoor air outside the room is formed as indicated by outlined arrows in FIG. 1.

The ventilation and air-conditioning apparatus 101 further includes a total heat exchanger 4 that performs total heat exchange between air currents flowing into the supply-air passage and the discharge-air passage. Also in the main-body casing 1, a bypass passage is formed in parallel to the discharge-air passage. The bypass passage is formed to bypass the total heat exchanger 4 and to lead from the discharge-air intake port 10 to the discharge-air blowout port 7. In addition, at a bifurcation point of the discharge-air passage and the bypass passage, a damper 12 is provided to switch these passages. The damper 12 rotates as shown by an arrow A in FIG. 1 by having a rotating shaft at the bifurcation point of the discharge-air passage and the bypass passage, and constitutes a passage switching unit that switches whether to pass indoor air taken in from the discharge-air intake port 10 through the total heat exchanger 4.

The main-body casing 1 further includes a supply-air blower 3 that is incorporated in the supply-air passage and that forms a supply-air current, a discharge-air blower 2 that is incorporated in a portion common to the discharge-air passage and the bypass passage and that forms a discharge-air current, and an air-conditioning coil 5 that is provided between the supply-air blower 3 and a humidifier 6 and that intends to heat or cool and humidify or dehumidify supply air. The capability of the air-conditioning coil 5 is adjusted by changing the degree of opening of a throttle device (LEV).

In the ventilation and air-conditioning apparatus 101, a humidifying passage portion for dehumidifying, heating, and humidifying a supply-air current flowing from a blowout port of the supply-air blower 3 in the main-body casing 1 is formed, and is divided into a humidifying-passage upper portion and a humidifying-passage lower portion in a vertical direction. The humidifying-passage upper portion is covered with a foamed resin, and the humidifying-passage lower portion has a drain bowl that is made of a foamed resin and whose water-reservoir surface is made of plastic to prevent water from entering the foamed resin. A temperature sensor 11 is provided near the supply-air blowout port 8 in the humidifying-passage upper portion. The ventilation and air-conditioning apparatus 101 further includes a control unit 14 that controls the apparatus based on operations performed by a remote controller 15.

In the total heat exchanger 4, a primary passage for passing therethrough the discharge-air current of the total heat exchanger 4 and a secondary passage for passing therethrough the supply-air current are intersecting vertically with each other so that total heat exchange is achieved, thereby enabling heat exchange ventilation.

As a route for air discharge, as described above, the discharge-air passage for passing through the total heat exchanger 4 and the bypass passage for not passing through the heat exchanger 4 are provided. Between the discharge-air passage and the bypass passage, the electrically-driven damper 12 is provided as the passage switching unit for switching whether to pass the indoor air taken in from the discharge-air intake port 10 through the total heat exchanger 4. By selecting the bypass passage with the damper 12, the indoor air can be discharged by the discharge-air blower 2 outside the room without passing it through the total heat exchanger 4 as indicated by hatched arrows in FIG. 2, thereby achieving normal ventilation that does not involve any heat exchange.

Basic operations of the ventilation and air-conditioning apparatus 101 include ON/OFF control of its operation via the external remote controller 15, an air-volume notch for increasing and decreasing the volume of air, mode switching between heating, cooling, and a fan, and ON/OFF control of humidifying. During heating and cooling, the air-conditioning coil 5 is driven, and when the humidifying is ON, the air-conditioning coil 5 is heated and water is supplied to the humidifier 6.

In an intermediate season during which an outdoor temperature is relatively comfortable, such as in spring and autumn, a user usually selects a "fan" mode as mode switching. When the "fan" mode is selected, the operation of the apparatus is started with the heat exchange ventilation, and the air-conditioning coil 5 is not operated. Outside air is taken in from the supply-air intake port 9, subjected to the total heat exchange in the heat exchanger 4 with indoor air taken in from the discharge-air intake port 10, and finally blown into the room from the supply-air blowout port 8. The temperature sensor 11 provided at the supply-air blowout port 8 detects a temperature of air to be supplied. The control unit 14 compares a target blowout temperature set by the remote controller 15 to the detected temperature of the temperature sensor 11, and operates the damper 12 to adjust the degree of opening of the damper 12 in a range from 0 to 100% and thus adjust the bypass passage so that the temperature of the air to be supplied becomes equal to the target blowout temperature, thereby adjusting a supply-air temperature by changing a ratio between the heat exchange ventilation and the normal ventilation. In the case of the present embodiment, when the degree of opening of the damper 12 is 0%, only the heat exchange ventilation is performed, and when the degree of opening of the damper 12 is 100%, only the normal ventilation is performed. When the target temperature is not reached, the damper 12 is operated whose degree of opening is set so that the supply-air temperature most closely approaches the target temperature. When the humidifying is ON by the remote controller 15, water is supplied to the humidifier 6, and then the air to be supplied is humidified and blown into the room from the supply-air blowout port 8 in the room.

In summer and winter, a user usually selects a "cooling" mode or a "heating" mode as the mode switching. For the "cooling" and the "heating", the operation of the apparatus is started with the heat exchange ventilation, and the air-conditioning coil 5 is operated. Outside air is taken in from the supply-air intake port 9, then subjected to the total heat exchange in the heat exchanger 4 with indoor air taken in from the discharge-air intake port 10, and the obtained air is heated or cooled through the air-conditioning coil 5. When water has been supplied in the humidifier 6, the heated or cooled air is humidified, and then blown into the room from the supply-air blowout port 8 in the room. The temperature sensor 11 provided at the supply-air blowout port 8 detects the temperature of the air to be supplied. The control unit 14 compares the target blowout temperature set by the remote controller 15 to the detected temperature of the temperature sensor 11, and operates the damper 12 to adjust the degree of opening of the damper 12 in a range from 0 to 100% and thus adjust the bypass passage so that the detected temperature reaches the target blowout temperature, thereby adjusting the supply-air temperature by changing the ratio between the heat exchange ventilation and the normal ventilation. The control unit 14 also controls the blowout temperature by adjusting the degree of LEV opening of the air-conditioning coil 5 and thereby adjusting the supply-air temperature. The humidifying is ON by the remote controller 15, water is supplied to the humidifier, and the air to be supplied is humidified and then blown into the room from the supply-air blowout port 8 in the room.

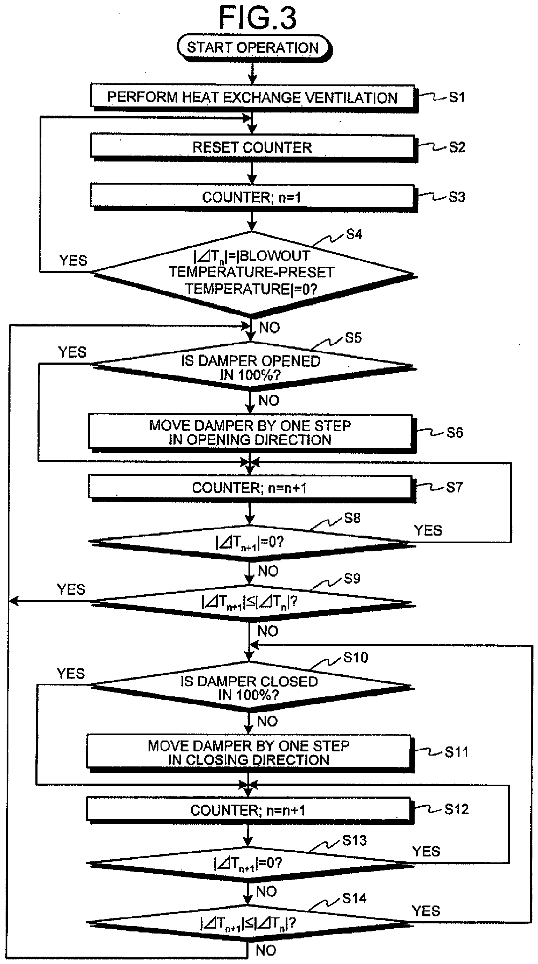

FIG. 3 is a flowchart of blowout temperature adjustment by the damper 12. In an intermediate season during which the outdoor temperature is relatively comfortable, such as in spring and autumn, the operation of the ventilation and air-conditioning apparatus 101 is started with the heat exchange ventilation at S1. At S2, a counter n is reset. At S3, the counter recognizes n=1. At S4, the temperature sensor 11 provided at the supply-air blowout port 8 detects the blowout temperature of the air blown from the supply-air blowout port 8, and a determination is made as to whether an absolute value of a temperature difference ΔTₙ between the blowout temperature and a preset temperature is 0. When the absolute value of the temperature difference ΔTₙ is not 0, the flow proceeds to S5, and when the absolute value of the temperature difference ΔTₙ is 0, the flow returns to the counter reset at S2.

At S5, a determination is made as to whether the degree of opening of the damper 12 is 100%. When the degree of opening is not 100%, the flow proceeds to S6, and when the degree of opening is 100%, the flow proceeds to S7. At S6, moving the damper 12 in an opening direction thereof by an angle of 5° is designated as one step, and this operation is performed for one step. At S7, the counter recognizes n+1, which is obtained by incrementing n by 1. At S8, the temperature sensor 11 provided at the supply-air blowout port 8 detects the blowout temperature, and a determination is made as to whether an absolute value of a temperature difference ΔTₙ₊₁ between the blowout temperature at the time of the counter n=n+1 and the preset temperature is 0. When the absolute value of the temperature difference ΔTₙ₊₁ is not 0, the flow proceeds to S9, and when the absolute value of the temperature difference ΔTₙ₊₁ is 0, the flow returns to S7. At S9, the temperature sensor 11 provided at the supply-air blowout port 8 detects the blowout temperature, and a determination is made as to whether the absolute value of the temperature difference ΔTₙ₊₁ obtained at the time of the counter n=n+1 is smaller than the absolute value of the temperature difference ΔTₙ obtained at the time of the counter n. When the absolute value of the temperature difference ΔTₙ₊₁ obtained at the time of the counter n=n+1 is smaller than the absolute value of the temperature difference ΔTₙ obtained at the time of the counter n, the flow returns to the determination at S5, and when the absolute value of the temperature difference ΔTₙ₊₁ obtained at the time of the counter n=n+1 is larger than the absolute value of the temperature difference ΔTₙ obtained at the time of the counter n, the flow proceeds to S10.

At S10, a determination is made as to whether the degree of closing of the damper 12 is 100%. When it is not 100%, the flow proceeds to S11, and when it is 100%, the flow proceeds to S12. At S11, moving the damper 12 in a closing direction thereof by an angle of 5° is designated as one step, and this operation is performed for one step. At S12, the counter recognizes n+1, which is obtained by incrementing n by 1. At S13, the temperature sensor 11 provided at the supply-air blowout port 8 detects the blowout temperature, and a determination is made as to whether the absolute value of the temperature difference ΔTₙ₊₁ between the blowout temperature at the time of the counter n=n+1 and the preset temperature is 0. When the absolute value of the temperature difference ΔT_{N+1} is not 0, the flow proceeds to S14, and when the absolute value of the temperature difference ΔTₙ₊₁ is 0, the flow returns to S12.

At S14, the temperature sensor 11 provided at the supply-air blowout port detects the blowout temperature, and a determination is made as to whether the absolute value of the temperature difference ΔT_{N+1} at the time of the counter n=n+1 is smaller than the absolute value of the temperature difference ΔTₙ at the time of the counter n. When the absolute value of the temperature difference ΔTₙ₊₁ at the time of the counter n=n+1 is smaller than the absolute value of the temperature difference ΔTₙ at the time of the counter n, the flow returns to the determination at S10, and when the absolute value of the temperature difference ΔTₙ₊₁ at the time of the counter n=n+1 is larger than the absolute value of the temperature difference ΔTₙ at the time of the counter n, the flow returns to S5. The blowout temperature adjustment is performed by the damper 12 as the control example described above.

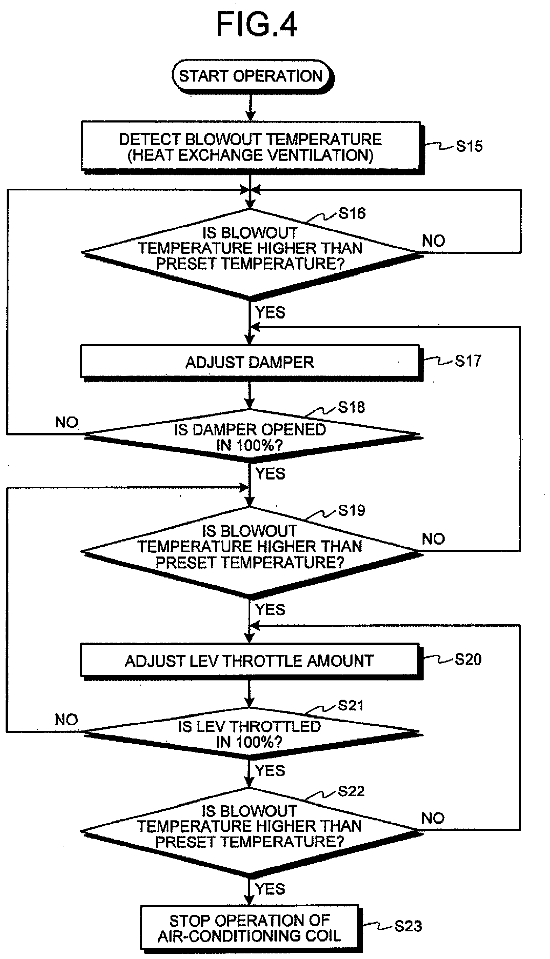

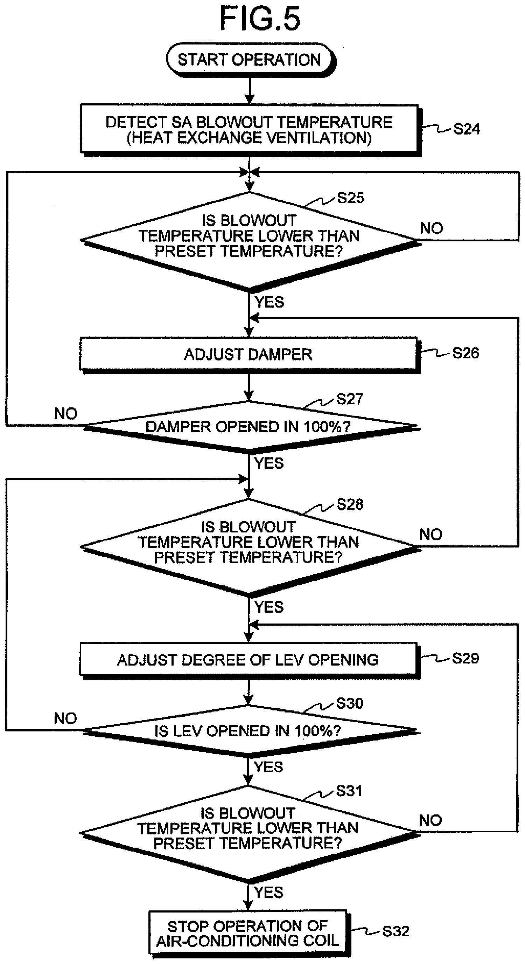

FIGS. 4 and 5 are flowcharts of a control executed during a heating operation and a cooling operation such as in winter and summer. In FIG. 4, when the heating operation is performed, a ventilation and air-conditioning apparatus starts to operate, and at S15, heat exchange ventilation is performed while the temperature sensor 11 provided at the supply-air blowout port 8 detects a blowout temperature. At S16, a determination is made as to whether the blowout temperature is higher than a preset temperature. When the blowout temperature is higher than the preset temperature, the flow proceeds to S17, and when the blowout temperature is smaller than the preset temperature, the flow returns to the determination at S16. At S17, normal ventilation is mixed by adjusting the degree of opening of the damper 12. The degree of opening is adjusted so that the blowout temperature decreases to the preset temperature. At S18, a determination is made as to whether the degree of opening of the damper 12 has reached 100%. When the degree of opening is 100%, the flow proceeds to S19, and when the damper 12 is not fully opened, the flow returns to the determination at S16. At S19, a determination is made as to whether the blowout temperature is higher than the preset temperature in a condition that the degree of opening of the damper 12 is 100%.

Also when the degree of opening of the damper 12 is 100% and thus only the normal ventilation is being performed, the flow proceeds to S20 in a case where the blowout temperature is higher than the preset temperature, while the flow returns to the operation at S17 in a case where the blowout temperature is lower than the preset temperature. At S20, a LEV throttle amount of the air-conditioning coil 5 is adjusted. The throttle amount is adjusted so that the blowout temperature falls to the preset temperature. At S21, a determination is made as to whether the LEV throttle amount has reached 100%. When the throttle amount is 100%, the flow proceeds to S22, and when the LEV is not fully throttled, the flow returns to the determination at S19. At S22, a determination is made as to whether the blowout temperature is higher than the preset temperature again. When the blowout temperature is higher than the preset temperature, the flow proceeds to S23, and when the blowout temperature is lower than the preset temperature, the flow returns to S20. At S23, the air-conditioning coil 5 is stopped.

In FIG. 5, when the cooling operation is performed, the ventilation and air-conditioning apparatus starts to operate, and at S24, the heat exchange ventilation is performed while the temperature sensor 11 provided at the supply-air blowout port 8 detects the blowout temperature. At S25, a determination is made as to whether the blowout temperature is lower than the preset temperature. When the blowout temperature is lower than the preset temperature, the flow proceeds to S26, and when the blowout temperature is higher than the preset temperature, the flow returns to the determination at S25. At S26, the degree of opening of the damper 12 is adjusted. The degree of opening is adjusted so that the blowout temperature rises to the preset temperature, thereby mixing the normal ventilation. At S27, a determination is made as to whether the degree of opening of the damper 12 has reached 100%.

When the degree of opening is 100%, the flow proceeds to S28, and when the damper 12 is not fully opened, the flow returns to the determination at S25. At S28, a determination is made as to whether the blowout temperature is lower than the preset temperature in a condition that the degree of opening of the damper 12 is 100%. Also when the degree of opening of the damper 12 is 100% and thus only the normal ventilation is being performed, the flow proceeds to S29 in the case where the blowout temperature is lower than the preset temperature, while the flow returns to the operation at S26 in the case where the blowout temperature is higher than the preset temperature. At S29, the degree of LEV opening of the air-conditioning coil 5 is adjusted. The degree of opening is adjusted so that the blowout temperature rises to the preset temperature. At S30, a determination is made as to whether the degree of LEV opening has reached 100%. When the degree of opening is 100%, the flow proceeds to S31, and when the LEV is not fully opened, the flow returns to the determination at S28. At S31, a determination is made as to whether the blowout temperature is lower than the preset temperature again. When the blowout temperature is lower than the preset temperature, the flow proceeds to S32, and when the blowout temperature is higher than the preset temperature, the flow returns to S29. At S32, the air-conditioning coil 5 is stopped.

As described above, the ventilation and air-conditioning apparatus 101 according to the present embodiment includes the air-conditioning coil 5, the discharge-air blower 2, the supply-air blower 3, the total heat exchanger 4, the damper 12, and the temperature sensor 11, and performs the ventilation by controlling the air-conditioning coil 5 with an open/close valve of the throttle device (LEV) while performing the total heat exchange between the supply air and the discharge air so that the supply-air blowout temperature becomes equal to a predetermined target temperature. At this time, a bypass passage is prepared for the normal ventilation, and the normal ventilation is mixed in a range from 0 to 100% by operating the damper 12. When the target temperature is not reached even by the 100% normal ventilation, the degree of opening of the throttle device LEV of the air-conditioning coil 5 is adjusted. Therefore, the supply-air temperature can be controlled without operating the air-conditioning coil 5 in intermediate seasons such as spring and autumn. Furthermore, also when the supply-air temperature is controlled using the air-conditioning coil 5, the use of the outdoor temperature reduces an adjustment load on the air-conditioning coil 5, which reduces opportunities to stop the air-conditioning coil 5 and to stop the operation of the outdoor unit, thereby realizing a stable operation.

According to the ventilation and air-conditioning apparatus of the present embodiment, by executing the control described above, the temperature of the air supplied to the room can be close to the target temperature by changing the ratio between the air entering from outside and the air obtained by the heat exchange between the supply air and the discharge air, without operating the air-conditioning coil 5 in intermediate seasons, so that blowout-temperature control can be achieved in a power-saving and comfortable manner. Furthermore, when the air-conditioning coil 5 is operated in summer and winter, the total heat exchange between the supply air and the discharge air is performed, and the outside air is introduced in a process in which the blowout temperature reaches the target temperature. This configuration can reduce the load on the air-conditioning coil 5 and avoid repetitive ON/OFF operations of the air-conditioning coil 5 and the outdoor unit, thereby maintaining a stable blowout temperature-controlled operation while causing less changes in the room temperature relative to the target temperature.

### Second embodiment.

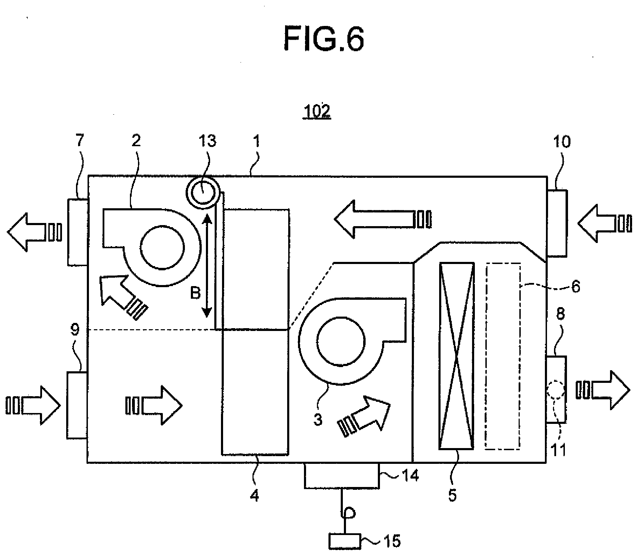

FIG. 6 is a schematic diagram of a ventilation and air-conditioning apparatus according to a second embodiment of the present invention. In a ventilation and air-conditioning apparatus 102 according to the present embodiment, a rolling-type shutter 13 is provided on a side of air blowout of the total heat exchanger 4 instead of the damper 12 according to the first embodiment. The rolling-type shutter 13 is provided on a side part of the discharge-air passage to cover a surface of the total heat exchanger 4 by being rolled in or drawn out as indicated by an arrow B in FIG. 6, and thus adjusts the volume of air passing through the total heat exchanger 4 per unit area of cross section, thereby setting the exchange efficiency variable. In the case of the present embodiment, when the degree of opening of the rolling-type shutter 13 is 0%, the normal ventilation is fully performed, and when the degree of opening of the rolling-type shutter 13 is 100%, the normal ventilation is performed in 50%.

According to the ventilation and air-conditioning apparatus 102 of the present embodiment, substantially the same effects as those of the first embodiment can be obtained, and because the rolling-type shutter 13 covers the discharge-air blower 2, operation noise of the discharge-air blower 2 as well as blowout noise can be reduced. In addition, unlike the first embodiment, it is not necessary to provide a space for the damper 12, and therefore size reduction of the apparatus can be achieved.

The ventilation and air-conditioning apparatus 101 according to the first embodiment and the ventilation and air-conditioning apparatus 102 according to the second embodiment include the total heat exchanger 4 for performing total heat exchange, as a heat exchanger for performing heat exchange between air currents flowing through a supply-air passage and a discharge-air passage; however, it suffices to include a heat exchanger simply for performing the heat exchange.

### Industrial Applicability

As described above, the ventilation and air-conditioning apparatus and the method for controlling a ventilation and air-conditioning apparatus according to the present invention are useful for a ventilation and air-conditioning apparatus having a heat exchanger that performs heat exchange between air currents flowing into a supply-air passage and a discharge-air passage, and for a method for controlling the apparatus, respectively.

### Reference Signs List

- 1: MAIN-BODY CASING (CASING)
- 2: DISCHARGE-AIR BLOWER
- 3: SUPPLY-AIR BLOWER
- 4: TOTAL HEAT EXCHANGER (HEAT EXCHANGER)
- 5: AIR-CONDITIONING COIL (TEMPERATURE ADJUSTMENT UNIT)
- 6: HUMIDIFIER
- 7: DISCHARGE-AIR BLOWOUT PORT
- 8: SUPPLY-AIR BLOWOUT PORT
- 9: SUPPLY-AIR INTAKE PORT
- 10: DISCHARGE-AIR INTAKE PORT
- 11: TEMPERATURE SENSOR
- 12: DAMPER (PASSAGE SWITCHING UNIT)
- 13: ROLLING-TYPE SHUTTER (PASSAGE SWITCHING UNIT)
- 14: CONTROL UNIT
- 15: EXTERNAL REMOTE CONTROLLER

## Claims

1. A ventilation and air-conditioning apparatus comprising:
a casing (1) provided with a supply-air intake port (9) and a discharge-air blowout port (7) on outside of a room, and a discharge-air intake port (10) and a supply-air blowout port (8) on inside of a room;
a supply-air passage formed in the casing to lead from a supply-air intake port (9) to a supply-air blowout port (7);
a discharge-air passage formed in the casing to lead from a discharge-air intake port (10) to a discharge-air blowout port (7);
a heat exchanger (4) that performs heat exchange between air currents flowing through the supply-air passage and the discharge-air passage;
a bypass passage formed in the casing in parallel to the discharge-air passage to bypass the heat exchanger (4) and to lead from the discharge-air intake port (10) to the discharge-air blowout port (7);
a supply-air blower that takes in outdoor air from a supply-air intake port (9) and supplies the outdoor air into a room from a supply-air blowout port (8);
a discharge-air blower that takes in indoor air from a discharge-air intake port (10) and discharges the indoor air from a discharge-air blowout port (7) to outside of the room;
a passage switching unit that is provided between the discharge-air passage and the bypass passage and that switches whether to pass indoor air taken in from a discharge-air intake port (10) through the heat exchanger (4);
a temperature sensor (11) that is provided between the heat exchanger (4) and the supply-air blowout port (8) and that measures a temperature of air supplied to a room; and
a control unit (14) that controls the supply-air blower (3), the discharge-air blower (2), and the passage switching unit (12, 13), and
a temperature adjustment unit that is provided on a side of a downstream of the heat exchanger in the supply-air passage and that heats or cools air in the supply-air passage, **characterized in that**
the control unit (14) controls the passage switching unit (12, 13) to adjust a degree of opening of the bypass passage in a range from 0 to 100% based on an output of the temperature sensor (14) so that a temperature of air supplied to a room approaches a predetermined temperature and
the control unit (14), when the temperature of air supplied to a room does not reach the predetermined temperature by adjusting the bypass passage, then starts to control the temperature adjustment unit so that the temperature of air supplied to the room approaches the predetermined temperature.

2. The ventilation and air-conditioning apparatus according to claim 1, wherein the temperature adjustment unit is an air-conditioning coil (5) that adjusts a heating temperature or a cooling temperature by a throttling degree of a throttle device.

3. The ventilation and air-conditioning apparatus according to claim 2, further comprising a humidifier (6) that is provided on a side of a downstream of the air-conditioning coil (5) in the supply-air passage and that humidifies air in the supply-air passage, wherein
the control unit (14) controls the humidifier (6) so that a humidity of air supplied to the room approaches a predetermined humidity.

4. The ventilation and air-conditioning apparatus according to any one of claims 1 to 3, wherein the passage switching unit (12, 13) is provided at a bifurcation point of the discharge-air passage and the bypass passage, and is a damper (12) for switching whether to allow a passage leading to a discharge-air intake port (9) to communicate with the discharge-air passage or with the bypass passage.

5. The ventilation and air-conditioning apparatus according to any one of claims 1 to 3, wherein the passage switching unit (12, 13) is provided in the discharge-air passage and the bypass passage, and is a rolling-type shutter (13) that opens and closes a passage by a rolling-in and drawing-out operation, and
covers the discharge-air blower (2) and a surface of the total heat exchanger (4) by being rolled in or drawn out.

6. A method for controlling a ventilation and air-conditioning apparatus according to claim 1, wherein
the method comprises
measuring a temperature by the temperature sensor provided between the heat exchanger (4) and the supply-air blowout port (8), the temperature including a temperature of air supplied to a room; and
controlling the passage switching unit to continuously adjust a degree of opening of the bypass passage in a range from 0 to 100% based on the measured temperature so that the temperature of air supplied to the room approaches a predetermined temperature and, when the temperature of air supplied to a room does not reach the predetermined temperature by adjusting the bypass passage, then starts to control the temperature adjustment unit so that the temperature of air supplied to the room approaches the predetermined temperature.

7. The method of controlling a ventilation and air-conditioning apparatus according to claim 6, wherein an amount of supply air and a humidity are controlled by a conditioning coil when the temperature of the air supplied to the room does not reach the predetermined temperature although the switching has reached a limit of an operation range thereof.

## Patentansprüche

1. Belüftungs- und Klimaanlage, umfassend:
ein Gehäuse (1), das mit einer Zulufteinlassöffnung (9) und einer Abluftausblasöffnung (7) außerhalb eines Raumes und einer Ablufteinlassöffnung (10) und einer Zuluftausblasöffnung (8) innerhalb eines Raumes versehen ist;
einen Zuluftdurchlass, der im Gehäuse ausgebildet ist, um von einer Zulufteinlassöffnung (9) zu einer Zuluftausblasöffnung (7) zu führen;
einen Abluftdurchlass, der im Gehäuse ausgebildet ist, um von einer Ablufteinlassöffnung (10) zu einer Abluftausblasöffnung (7) zu führen;
einen Wärmetauscher (4), der Wärmeaustausch zwischen Luftströmungen, strömend durch den Zuluftdurchlass und den Abluftdurchlass, durchführt;
einen Umgehungsdurchlass, der im Gehäuse parallel zum Abluftdurchlass gebildet ist, um den Wärmetauscher (4) zu umgehen und von der Ablufteinlassöffnung (10) zur Abluftausblasöffnung (7) zu führen;
ein Zuluftgebläse, das Außenluft aus einer Zulufteinlassöffnung (9) aufnimmt und die Außenluft aus einer Zuluftausblasöffnung (8) einem Raum zuführt;
ein Abluftgebläse, das Innenraumluft aus einer Ablufteinlassöffnung (10) aufnimmt und die Innenraumluft aus einer Abluftausblasöffnung (7) zur Außenseite des Raumes abgibt;
eine Durchlassschalteinheit, die zwischen dem Abluftdurchlass und dem Umgehungsdurchlass vorgesehen ist und die schaltet, falls aus einer Ablufteinlassöffnung (10) aufgenommene Innenraumluft durch den Wärmetauscher (4) geleitet werden soll;
einen Temperatursensor (11), der zwischen dem Wärmetauscher (4) und der Zuluftausblasöffnung (8) vorgesehen ist und der eine Temperatur der einem Raum zugeführten Luft misst; und
eine Steuereinheit (14), die das Zuluftgebläse (3), das Abluftgebläse (2) und die Durchlassschalteinheit (12, 13) steuert, und
eine Temperaturanpassungseinheit, die auf einer Seite stromab des Wärmetauschers im Zuluftdurchlass vorgesehen ist und die Luft im Zuluftdurchlass erwärmt oder kühlt, **dadurch gekennzeichnet, dass**
die Steuereinheit (14) die Durchlassschalteinheit (12, 13) steuert, um einen Öffnungsgrad des Umgehungsdurchlasses in einem Bereich von 0 bis 100% zu steuern basierend auf einer Ausgabe des Temperatursensors (14), so dass eine Temperatur der einem Raum zugeführten Luft sich einer vorherbestimmten Temperatur annähert, und
die Steuereinheit (14), wenn die Temperatur der einem Raum zugeführten Luft die vorherbestimmte Temperatur durch Anpassung des Umgehungsdurchlasses nicht erreicht, dann beginnt, die Temperaturanpassungseinheit zu steuern, so dass sich die Temperatur der dem Raum zugeführten Luft der vorherbestimmten Temperatur annähert.

2. Belüftungs- und Klimaanlage nach Anspruch 1, wobei die Temperaturanpassungseinheit eine Klimatisierungsspule (5) ist, die eine Erwärmungstemperatur oder eine Kühlungstemperatur durch einen Drosselungsgrad einer Drosseleinrichtung anpasst.

3. Belüftungs- und Klimaanlage nach Anspruch 2, ferner umfassend einen Luftbefeuchter (6), der auf einer Seite stromab der Klimatisierungsspule (5) im Zuluftdurchlass vorgesehen ist und der die Luft im Zuluftdurchlass befeuchtet, wobei
die Steuereinheit (14) den Luftbefeuchter (6) steuert, so dass sich eine Feuchtigkeit der dem Raum zugeführten Luft einer vorherbestimmten Feuchtigkeit annähert.

4. Belüftungs- und Klimaanlage nach einem der Ansprüche 1 bis 3, wobei die Durchlassschalteinheit (12, 13) an einem Gabelungspunkt des Abluftdurchlasses und des Umgehungsdurchlasses vorgesehen ist und ein Dämpfer (12) zum Schalten ist, falls ermöglicht werden soll, das ein Durchlass, führend zu einer Ablufteinlassöffnung (9), mit dem Abluftdurchlass oder mit dem Umgehungsdurchlass kommunizieren kann.

5. Belüftungs- und Klimaanlage nach einem der Ansprüche 1 bis 3, wobei die Durchlassschalteinheit (12, 13) im Abluftdurchlass und im Umgehungsdurchlass vorgesehen ist und ein Öffnungs-/Schließmittel vom Einfahr-/Ausfahrtyp (13) ist, das einen Durchlass durch einen Einfahr- und Ausfahrbetrieb öffnet und schließt, und das Abluftgebläse (2) und eine Oberfläche des gesamten Wärmetauschers 4) bedeckt, indem es eingefahren oder ausgefahren wird.

6. Verfahren zum Steuern einer Belüftungs- und Klimaanlage nach Anspruch 1, wobei das Verfahren umfasst:
Messen einer Temperatur durch den Temperatursensor, der zwischen dem Wärmetauscher (4) und der Zuluftausblasöffnung (8) vorgesehen ist, wobei die Temperatur eine Temperatur der einem Raum zugeführten Luft umfasst; und
Steuern der Durchlassschalteinheit, um einen Öffnungsgrad des Umgehungsdurchlasses in einem Bereich von 0 bis 100% kontinuierlich anzupassen basierend auf der gemessenen Temperatur, so dass sich die Temperatur der dem Raum zugeführten Luft einer vorherbestimmten Temperatur annähert, und, wenn die Temperatur der einem Raum zugeführten Luft durch Anpassung des Umgehungsdurchlasses die vorherbestimmte Temperatur nicht erreicht, dann beginnt, die Temperaturanpassungseinheit zu steuern, so dass sich die Temperatur der dem Raum zugeführten Luft der vorherbestimmten Temperatur annähert.

7. Verfahren zum Steuern einer Belüftungs- und Klimaanlage nach Anspruch 6, wobei eine Menge an Zuluft und eine Feuchtigkeit durch eine Klimatisierungsspule gesteuert werden, wenn die Temperatur der dem Raum zugeführten Luft die vorherbestimmte Temperatur nicht erreicht, obwohl das Schalten eine Grenze seines Betriebsbereichs erreicht hat.

## Revendications

1. Appareil de ventilation et de climatisation comprenant :
un boîtier (1) prévu avec un orifice d'admission d'air d'alimentation (9) et un orifice de soufflage d'air de décharge (7) à l'extérieur d'une pièce, et un orifice d'admission d'air de décharge (10) et un orifice de soufflage d'air d'alimentation (8) à l'intérieur d'une pièce ;
un passage d'air d'alimentation formé dans le boîtier pour aller d'un orifice d'admission d'air d'alimentation (9) à un orifice de soufflage d'air d'alimentation (7) ;
un passage d'air de décharge formé dans le boîtier pour aller d'un orifice d'admission d'air de décharge (10) à un orifice de soufflage d'air de décharge (7) ;
un échangeur de chaleur (4) qui réalise un échange de chaleur entre des flux d'air s'écoulant à travers le passage d'air d'alimentation et le passage d'air de décharge ;
un passage de dérivation formé dans le boîtier parallèlement au passage d'air de décharge pour contourner l'échangeur de chaleur (4) et pour aller de l'orifice d'admission d'air de décharge (10) à l'orifice de soufflage d'air de décharge (7) ;
une soufflante d'air d'alimentation qui prend l'air extérieur d'un orifice d'admission d'air d'alimentation (9) et amène l'air extérieur dans une pièce à partir d'un orifice de soufflage d'air d'alimentation (8) ;
une soufflante d'air de décharge qui prend l'air intérieur de l'orifice d'admission d'air de décharge (10) et décharge l'air intérieur par un orifice de soufflage d'air de décharge (7) à l'extérieur de la pièce ;
une unité de commutation de passage qui est prévue entre le passage d'air de décharge et le passage de dérivation et qui commute selon s'il faut faire passer l'air intérieur pris par l'orifice d'admission d'air de décharge (10) par l'échangeur de chaleur (4) ;
un capteur de température (11) qui est prévu entre l'échangeur de chaleur (4) et l'orifice de soufflage d'air d'alimentation (8) et qui mesure une température de l'air amené dans une pièce ; et
une unité de commande (14) qui commande la soufflante d'air d'alimentation (3), la soufflante d'air de décharge (2) et l'unité de commutation de passage (12, 13), et
une unité d'ajustement de température qui est prévue d'un côté en aval de l'échangeur de chaleur dans le passage d'air d'alimentation et qui chauffe ou refroidit l'air dans le passage d'air d'alimentation, **caractérisé en ce que** :
l'unité de commande (14) commande l'unité de commutation de passage (12, 13) pour ajuster un degré d'ouverture du passage de dérivation dans la plage de 0 à 100% sur la base d'un résultat du capteur de température (14) de sorte qu'une température de l'air amené dans une pièce se rapproche d'une température prédéterminée, et
l'unité de commande (14), lorsque la température de l'air amené dans une pièce n'atteint pas la température prédéterminée en ajustant le passage de dérivation, commence alors à commander l'unité d'ajustement de température de sorte que la température de l'air amené dans la pièce se rapproche de la température prédéterminée.

2. Appareil de ventilation et de climatisation selon la revendication 1, dans lequel l'unité d'ajustement de température est une bobine de climatisation (5) qui ajuste une température de chauffage ou une température de refroidissement par un degré d'étranglement d'un dispositif d'étranglement.

3. Appareil de ventilation et de climatisation selon la revendication 2, comprenant en outre un humidificateur (6) qui est prévu d'un côté en aval de la bobine de climatisation (5) dans le passage d'air d'alimentation et qui humidifie l'air dans le passage d'air d'alimentation, dans lequel :
l'unité de commande (14) commande l'humidificateur (6) de sorte qu'une humidité de l'air amené dans la pièce se rapproche d'une humidité prédéterminée.

4. Appareil de ventilation et de climatisation selon l'une quelconque des revendications 1 à 3, dans lequel l'unité de commutation de passage (12, 13) est prévue au niveau d'un point de bifurcation du passage d'air de décharge et du passage de dérivation, et est un amortisseur (12) pour commuter selon s'il faut permettre à un passage menant à un orifice d'admission d'air de décharge (9) de communiquer avec le passage d'air de décharge ou avec le passage de dérivation.

5. Appareil de ventilation et de climatisation selon l'une quelconque des revendications 1 à 3, dans lequel l'unité de commutation de passage (12, 13) est prévue dans le passage d'air de décharge et le passage de dérivation, et est un obturateur de type roulant (13) qui ouvre et ferme un passage par une opération d'enroulement et de déroulement, et
recouvre la soufflante d'air de décharge (2) et une surface de l'échangeur de chaleur total (4) en étant enroulé ou déroulé.

6. Procédé pour commander un appareil de ventilation et de climatisation selon la revendication 1, dans lequel :
le procédé comprend les étapes consistant à :
mesurer une température par le capteur de température prévu entre l'échangeur de chaleur (4) et l'orifice de soufflage d'air d'alimentation (8), la température comprenant une température de l'air amené dans une pièce ; et
commander l'unité de commutation de passage pour ajuster, en continu, un degré d'ouverture du passage de dérivation dans une plage de 0 à 100%, sur la base de la température mesurée de sorte que la température de l'air amené dans la pièce se rapproche d'une température prédéterminée et, lorsque la température de l'air amené dans une pièce n'atteint pas la température prédéterminée en ajustant le passage de dérivation, commence alors à commander l'unité d'ajustement de température de sorte que la température de l'air amené dans la pièce se rapproche de la température prédéterminée.

7. Procédé pour commander un appareil de ventilation et de climatisation selon la revendication 6, dans lequel une quantité d'air d'alimentation et une humidité sont commandées par une bobine de climatisation lorsque la température de l'air amené dans la pièce n'atteint pas la température prédéterminée bien que la commutation ait atteint une limite dans sa plage de fonctionnement.
